# EUROPEAN PATENT APPLICATION

(11) **EP 1 672 334 A1**
(43) Date of publication of application: **21.06.2006**
(21) Application number: 05077570.9
(22) Date of filing: 10.11.2005
(51) Int. Cl.: G01G 19/08

(54) **Vehicle with weighing means**

(30) Priority: 17.12.2004 NL 1027809
(71) Applicant: Welvaarts Weegsystemen B.V., 5215 MC s'-Hertogenbosch (NL)
(72) Inventor: Welvaarts, Henricus Johannes Antonius, 5275 BC Den Dungen (NL)
(74) Representative: Vollebregt, Cornelis Jacobus

(57) **Abstract**

The invention relates to a vehicle comprising a chassis and a cargo body supported by the chassis, which cargo body is intended for receiving a cargo, wherein weighing means are provided between said chassis and said cargo body near the ends of the cargo body. Furthermore, at least one supporting element is provided between said cargo body and said chassis, which supporting element can be adjusted by means of a pressurised fluid from a first position, in which the supporting element transfers at least substantially no part of the weight of the cargo body and the cargo that may be present therein to the chassis, to a second position, in which at least part of the weight of the cargo body and the cargo that may be present therein is transferred to the chassis via the supporting element.

## Description

The invention relates to a vehicle comprising a chassis and a cargo body supported by the chassis, which carbo body is intended for receiving a cargo, wherein weighing means are provided between said chassis and said cargo body near the ends of the cargo body, and wherein at least one supporting element is furthermore provided between said cargo body and said chassis, which supporting element can be adjusted by means of a pressurised fluid from a first position, in which the supporting element does not transfer part of the weight of the cargo body and the cargo that may be present therein to the chassis, to a second position for relieving the load on the weighing means.

Such a vehicle is known from European patent application No. 0 200 281. This known construction comprises a few supporting elements, by means of which the cargo body supported by the chassis and the cargo that may be present therein can be moved upwards to a position in which the weighing means are completely relieved of their load and in which the cargo body is secured in position with respect to the chassis by means of the supporting elements.

With this known construction, the weight of the cargo body and the cargo is transferred to the chassis solely by the supporting elements while driving, thereby relieving the weighing means of their load.

A construction which is basically similar to the construction according to European patent application No. 0 200 281 can be derived from US patent No. 5,773,768.

According to the invention, the construction of the vehicle is such that part of the weight of the cargo body and the cargo that may be present therein is transferred to the chassis of the vehicle by the weighing means in the second position of the supporting element, and part of the weight of the cargo body and the cargo that may be present therein is transferred to the chassis of the vehicle by the supporting element.

By using the construction according to the invention, the weight of the cargo body and the cargo can be transferred to the chassis at several positions by the weighing means and the supporting element while the vehicle is being driven, making it possible to load the chassis and the cargo body in a uniform manner.

It is noted that a vehicle comprising a chassis and a cargo body with weighing means present between the chassis and the cargo body is known from German patent application No. 40 03 02020. Said vehicle comprises means by which the cargo body can be forcefully pulled into contact with the weighing means for transport, so that the weight of the cargo body and the cargo that may be present therein is transferred to the chassis solely via the weighing means.

A very efficient construction and a uniform distribution of the load can be effected if the supporting element is positioned between the weighing means that are disposed near the ends of the cargo body.

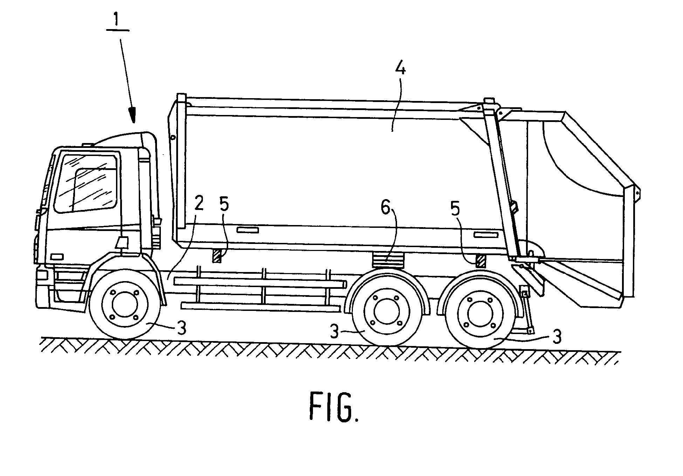

The invention will be explained in more detail hereinafter with reference to the appended figure, which schematically shows a vehicle provided with a cargo body.

The vehicle 1 as shown in the figure, a conventional lorry in this embodiment, comprises a chassis 2 supported by a number of wheels 3. A cargo body 4, in the form of a cargo compartment of a garbage truck in the illustrated embodiment, is placed on the chassis. The vehicle may also be provided with a different type of cargo body, of course, for example an open or a closed loading platform, a tank or the like.

The cargo body 4 is supported on the chassis 2 by weighing means 5 in the form of so-called load cells or force sensors disposed near the ends of the cargo body 4, by means of which the weight of the cargo resting on the load cells can be determined on the basis of the deformation of strain gauges or the like mounted in the load cells. Usually such load cells are provided near the two sides of the vehicle, between the cargo body and the longitudinal girders of the chassis.

At least one supporting element 6 is provided between the chassis and the cargo body 4, between the load cells 5 disposed near the ends of the cargo body. According to another possibility, two such supporting elements are provided, each supporting element being provided between a longitudinal girder of the chassis and the cargo body. In the embodiment as schematically shown, the supporting element 6 is an air bellows. By pressurising the air bellows, part of the weight of the cargo body and the cargo that may be present therein can be transferred to the chassis 2 via the air bellows, so that it is not only the weighing means 5 that transfer the weight of the cargo body and any cargo that may be present therein to the chassis 2. Such a weight transferring position of the supporting element 6 will generally be used while the vehicle is being driven. The weighing means are thus partially relieved of their load. Furthermore, when a supporting element 6 is positioned between the weighing elements 5 that are disposed near the ends of the cargo body, a more favourable distribution of the load over the chassis and/or the cargo body is achieved. To weigh the cargo body and the cargo that is present therein while the vehicle is stationary, the air can be allowed to escape from the bellows 6, so that the weight of the cargo body 4 and the cargo that may be present therein is solely supported by the weighing means 5, thereby making it possible to determine the weight of the cargo body and the cargo that is present therein.

Preferably, means are provided which automatically place the supporting element(s) 6 in a position in which it (they) transfer(s) at least part of the weight of the cargo body and the cargo that may be present therein to the chassis when the vehicle is set moving. Furthermore, provisions may be made for adjusting the supporting element(s) in dependence on the measured weight of the cargo body and the cargo that may be present therein, such that an optimum distribution of the weight of the cargo body and the cargo over the measuring means and the supporting element(s) is obtained.

It is also possible to use adjustable supporting elements other than a supporting element in the form of an air bellows, for example pneumatically or hydraulically operated setting cylinders.

Furthermore, the vehicle need not necessarily be a truck, and the vehicle may be fitted with caterpillar tracks rather than with tyres.

## Claims

1. A vehicle comprising a chassis and a cargo body supported by the chassis, which cargo body is intended for receiving a cargo, wherein weighing means are provided between said chassis and said cargo body near the ends of the cargo body, and wherein at least one supporting element is furthermore provided between said cargo body and said chassis, which supporting element can be adjusted by means of a pressurised fluid from a first position, in which the supporting element does not transfer part of the weight of the cargo body and the cargo that may be present therein to the chassis, to a second position for relieving the load on the weighing means, **characterized in that** the construction of the vehicle is such that part of the weight of the cargo body and the cargo that may be present therein is transferred to the chassis of the vehicle by the weighing means in the second position of the supporting element, and part of the weight of the cargo body and the cargo that may be present therein is transferred to the chassis of the vehicle by the supporting element.

2. A vehicle according to claim 1, **characterized in that** a supporting element is disposed between weighing means provided near the ends of the cargo body.

3. A vehicle according to claim 1 or 2, **characterized in that** a supporting element is disposed between the chassis and the cargo body near the two sides of the chassis.

4. A vehicle according to any one of the claims 1-3, **characterized in that** said supporting element is an air bellows.

5. A vehicle according to any one of the claims 1-3, **characterized in that** said supporting element is a setting cylinder.
